# EUROPEAN PATENT SPECIFICATION

(11) **EP 1 568 229 B1**
(45) Date of publication and mention of the grant of the patent: **20.08.2008**
(21) Application number: 03786232.3
(22) Date of filing: 29.10.2003
(51) Int. Cl.: H04N 7/18, H04N 7/15, H04N 7/14

(54) **NETWORK CAMERA SYSTEM**
NETZWERKKAMERASYSTEM
SYSTEME DE CAMERA DE RESEAU

(30) Priority: 29.10.2002 JP 2002313891
(43) Date of publication of application: 31.08.2005
(73) Proprietor: MATSUSHITA ELECTRIC INDUSTRIAL CO., LTD., Kadoma-shi, Osaka 571-8501 (JP)
(72) Inventor: ARIMA, Yuji, Fukuoka 838-0101 (JP); YOSHIKAI, Tadashi, Fukuoka 811-1351 (JP); KIHARA, Toshiyuki, Fukuoka 811-3305 (JP)
(74) Representative: Eisenführ, Speiser & Partner
(86) International application number: PCT/JP2003/013864
(87) International publication number: WO 2004/040909

(56) References cited:
- EP-A- 0 909 070
- JP-A- 2001 094 965
- JP-A- 2001 231 032
- US-A- 5 450 140
- KAKIMURA Y ET AL: "A real-time MPEG1 Ethernet camera system" CONSUMER ELECTRONICS, 1999. ICCE. INTERNATIONAL CONFERENCE ON LOS ANGELES, CA, USA 22-24 JUNE 1999, PISCATAWAY, NJ, USA,IEEE, US, 22 June 1999 (1999-06-22), pages 216-217, XP010346607 ISBN: 0-7803-5123-1

## Description

### <TECHNIAL FIELD>

The present invention relates to a network camera system which reproduces the window displays of images and audios in association in a network terminal, a network camera which constitutes the network camera system, the network terminal, and a audio reproduction method which reproduces the window displays of images and audios in association.

### <BACKGROUND ART>

The recent progresses of digital technology and network technology have been remarkable, and it has been practiced to connect multimedia terminals, for example, personal computers to the Internet and to receive and reproduce pictures and audios from various sites. On this occasion, the personal computer or the like has both a function as a network terminal and a function as AV equipment.

Meanwhile, in a case where such a conventional multimedia terminal includes only one loudspeaker for outputting a audio and where the audio data and image data of a plurality of sites are received at the same time, the individual audio data are mixed and outputted. When the audios of a plurality of contents are mixed and outputted, there is the problem that the contents cannot be caught.

In this regard, a multimedia terminal apparatus has been proposed which, when a plurality of sorts of contents have been received, automatically selects and outputs one of the audio signals of the plurality of contents (refer to JP-A-2001-94965). Fig. 9 is a block diagram of the multimedia terminal apparatus in the related art.

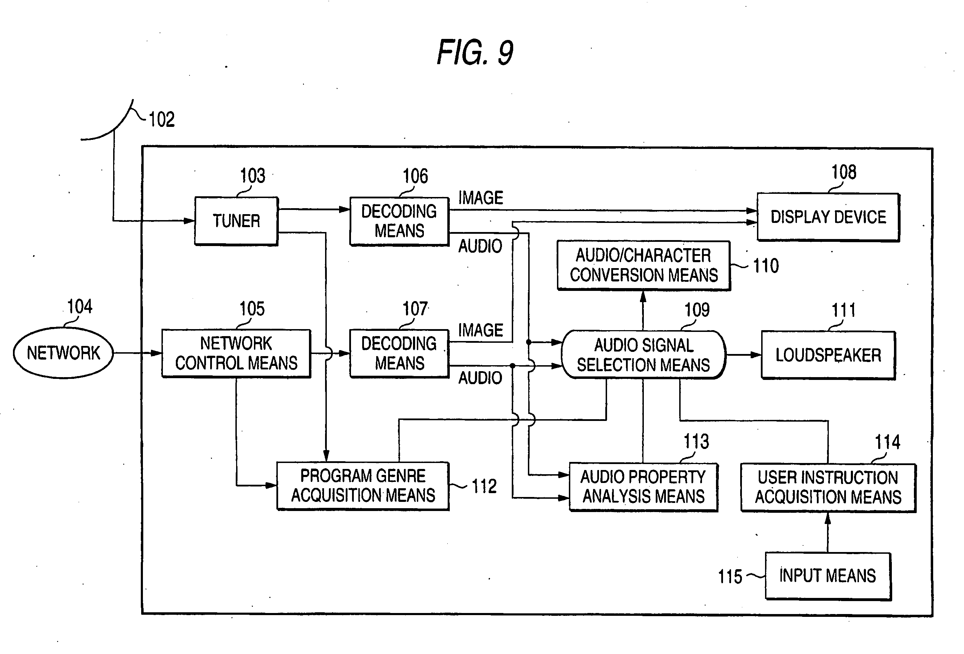

The conventional multimedia terminal apparatus receives digital broadcast signals from an antenna 102 in Fig. 9 and demultiplexes multiplexed data by a tuner 103, or it receives the contents of a homepage etc. by network control means 105 through a network 104. Besides, the multimedia terminal apparatus includes program genre acquisition means 112 for determining the priority degrees of the audio signals of the individual contents in accordance with the program genres of the respective contents, audio property analysis means 113 for sensing the ratio of the soundless part of each audio signal from the signal level of the audio signal and for lowering the priority degree when the ratio is high, and user instruction acquisition means 114 for storing an output format which a user has inputted by input means 115. Using the priority degree which is sent from the program genre acquisition means 112 and the audio property analysis means 113, and that output format of the audio signal which is sent from the user instruction acquisition means 114, audio signal selection means 109 determines so as to output one of audio signals sent from decoding means 106, 107, by the loudspeaker 111, and to display the other as a character string by a display device 108.

The multimedia terminal apparatus illustrated in Fig. 9 is such that a plurality of images are simultaneously arrayed and displayed in parallel as in, for example, the guide screen of broadcasting programs, and that one is selected from among the audio signals of the individual contents so as to be outputted. In the selection, the priority degree (conforming to the priority sequence of, for example, a music program, a drama, a sport and news) is determined by the program genre acquisition means 112 and the audio property analysis means 113. Accordingly, the scheme is suited to such a case where the plurality of different broadcasting programs are guided, but it is difficult of automatically selecting a audio in a case, for example, where the audio is to be selected in communications with a plurality of equal servers of the same quality.

In case of, for example, a network camera system wherein, using a personal computer or the like network terminal connected to a network, a plurality of cameras are accessed through the network by a browser installed in the network terminal, so as to obtain images and audios by the cameras, windows for displaying the images of the respective cameras are superposed and displayed by the browser, and audio signals from the respective cameras are mixed and outputted as audios.

On this occasion, even when it is intended to apply the technique disclosed in JP-A-2001-94965, the display formats of the images are different, and the priority degrees cannot be set beforehand for the cameras which are all equal. It is accordingly difficult to determine the priority degrees by such means as the program genre acquisition means and the audio property analysis means.

As described above, in the case of the multimedia terminal equipment including only one loudspeaker, when the audio data and the image data are simultaneously received from the plurality of sites, the audios are outputted by mixing the respective audio data. When the audios of the plurality of contents are mixed and outputted, there is the problem that the contents cannot be caught though a part desired to be preferentially caught exists in relation to the display screen.

Besides, with the multimedia terminal wherein, when the plurality of sorts of contents have been received, one of the audio signals is selected from among the plurality of contents in accordance with the priority degrees so as to output the selectedaudio signal, thepluralityof images are simultaneously arrayed and displayed in parallel as in the guide screen of the broadcasting programs, and the selection of the audio is determined in accordance with the preset priority degrees (in that sequence of, for example, the music program, drama, sport and news in which the user desires to watch them).

However, in the case where the audio is to be outputted in the simultaneous communications with the plurality of equal network cameras or like servers of the same quality, it is difficult to apply this scheme. In such a case, the images are equal to one another and are therefore displayed as the plurality of windows in superposition, and the audio signals are simply mixed and outputted. Besides, the contents are all equal and cannot have the priority degrees assigned thereto beforehand, so that the utilisation of the priority degrees based on the contents is difficult. When one camera for outputting the audio is forcibly fixed, the audio of the camera can be transferred, but this aspect lacks in conveniency. In this manner, the prior-art network camera system has the problems that which of the network cameras the audio is outputted from is difficult to judge, and that the operability thereof is inferior. Herein, if the case of such equal servers of the same quality can be processes best, the best processing ought to be attained, even in a case where various servers are involved.

JP 2001-231032 discloses an image display method for a network camera. The disposed image display method allows the display device to display plural windows at the time, wherein each window displays an image photographed by each camera by cross-referencing each camera through each window. A priority is placed on each camera. The size of a window displaying an image photographed by a camera with higher priority is increased larger and towards this side. Furthermore, an operator using this method can freely drag each window. The image picked up by the camera for each window is converted into a file and the file is stored in a storage device, while writing a storage time to the header part of the file.

### DISCLOSURE OF THE INVENTION

In view of the above problems of the related art, the present invention has for its object to provide a network camera system in which, when images are window-displayed, the images and audios can be outputted in association without requiring any special operation.

In order to accomplish the object, a network camera system is presented by the present invention as defined in claim 1. Thus, when images are window-displayed in the network terminal, the images and the audios can be outputted in association without requiring any special operation. Only the audio from a desired one of the network cameras can be outputted in such a way, for example, that a user merely designates the window corresponding to the network camera by the operation of moving a cursor and clicking this window. It is therefore possible to avoid a situation where which of the images the audios correspond to is not known because the audios are mixed and reproduced.

Further, a corresponding audio reproduction method is presented by the present invention as defined in claim 15.

### <BRIEF DESCRIPTION OF THE DRAWINGS>

Fig. 1 is a system architecture diagram of a network terminal and network cameras in Embodiment 1 of the present invention.
Fig. 2 is a block diagram of an applet in Embodiment 1 of the present invention.
Fig. 3 is a block diagram of the network camera in Embodiment 1 of the present invention.
Fig. 4 is a flow chart of a process for associating a window display and a audio in Embodiment 1 of the present invention.
Fig. 5A is a block diagram of an applet in Embodiment 2 of the present invention.
Fig. 5B is an explanatory view of window display screens in each of which a display sequence input button is indicated.
Fig. 6 is a flow chart of a process for associating a window display and a audio in Embodiment 2 of the present invention.
Fig. 7 is a block diagram of an applet in Embodiment 3 of the present invention.
Fig. 8 is a flow chart of a process for associating a window display and a audio in Embodiment 3 of the present invention.
Fig. 9 is a block diagram of a multimedia terminal apparatus in the prior art.

### <BEST MODE FOR CARRYING OUT THE INVENTION>

Now, embodiments of the present invention will be described with reference to the drawings.

### (EMBODIMENT 1)

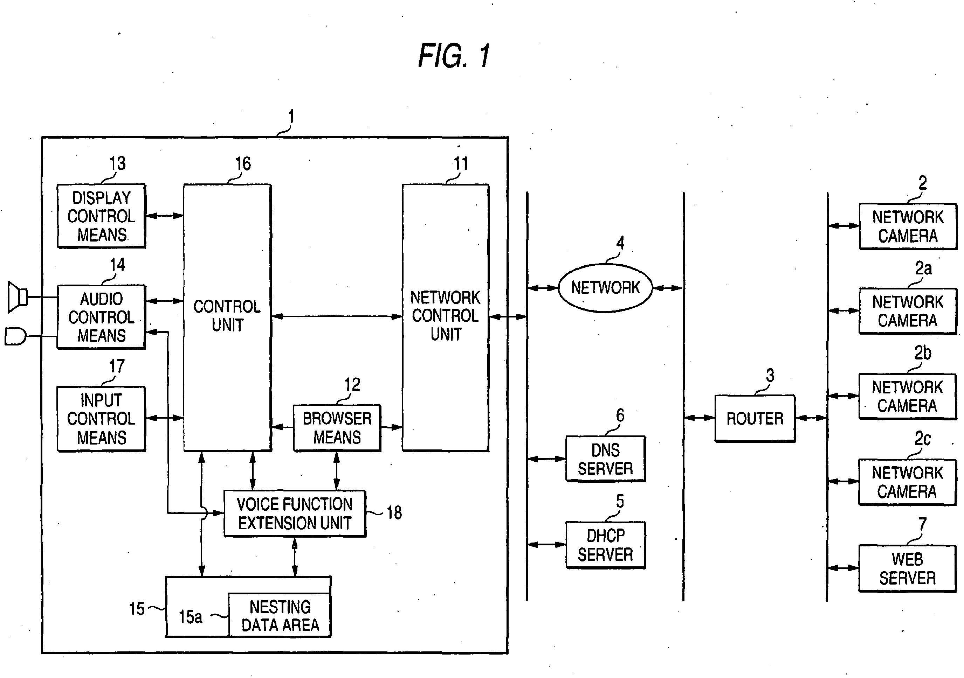

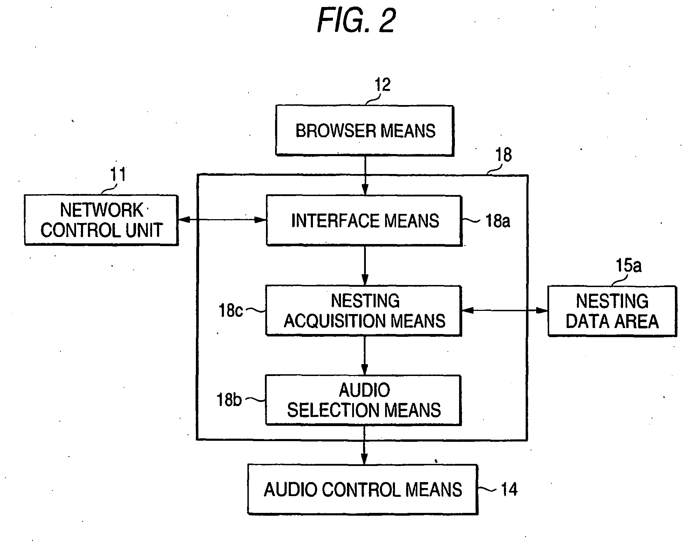

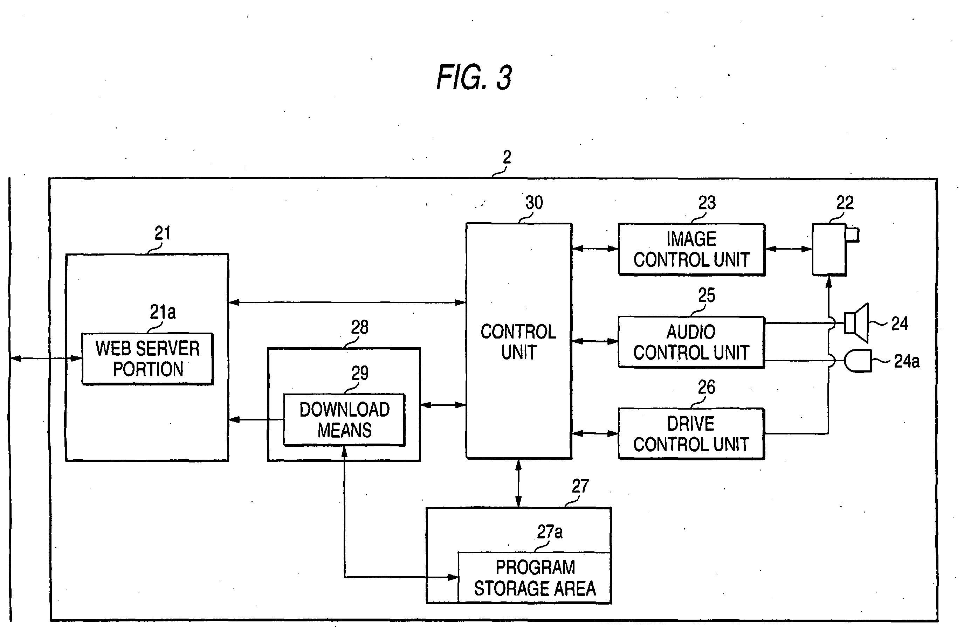

There will be described a network camera system and its audio output method in Embodiment 1 of the present invention, and an applet therefor. Fig. 1 is a system architecture diagram of a network terminal and network cameras in Embodiment 1 of the present invention, Fig. 2 is a functional block diagram of an applet in Embodiment 1 of the present invention, and Fig. 3 is a block diagram of the network camera in Embodiment 1 of the present invention.

In the general architecture of the network camera system as shown in Fig. 1, numeral 1 designates a network terminal, such as personal computer, which can display images on a display device and can also emit audios. Signs 2, 2a, 2b, 2c denote network cameras each having a function as an imaging server which can be accessed from the network terminal 1, and which transmits picture data imaged by a camera unit 22 to be stated later, in response to the access. Numeral 3 designates a router which governs the network cameras 2, 2a, 2b, 2c, and numeral 4 a network such as the Internet.

Numeral 5 designates a DHCP server which, in connecting the network terminal 1 to the network 4, allots a global IP address to this network terminal. Shown at numeral 6 is a DNS server which, when the network terminal 1 having acquired the global IP address accesses it by a host name and a port No. or the like, translates the host name into the global IP address of the router 3. A Web server 7 can download the network terminal 1 with plugin software for reproducing a audio and a moving picture by extending the function of a browser, and Java (R) applet or the like ("Java (R) " is a registered trademark, and shall be termed the "applet" below) exceptionally as explained later.

In such a network camera system, when the network terminal 1 requests the network cameras 2, 2a, 2b, 2c to transmit images by the host names and port Nos. thereof, it first obtains the global IP address from the DNS server 6 and sends the request to the router 3. The request is subjected to port forwarding in accordance with the port Nos. designated by the router 3, and is transmitted to the network cameras 2, 2a, 2b, 2c. Conversely, the images are sent to the router 3, and owing to the NAT function of the router 3, they are transferred to the network terminal 1 via the network 4 with the router 3 as a data source.

There will now be described the internal architecture of the network camera system constructing such a system, and the network terminal 1. Referring to Fig. 1, numeral 11 designates a network control unit which controls the communications of the network terminal 1 with the network 4. When a server connected to the Internet or the like network 4 is accessed through the network control unit 11, browser means 12 receives a Web page which is constituted by, for example, text data and layout information based on HTML, or picture and audio files or a moving picture file embedded in a document by link information or the like, and it reproduces the Web page by a display device and a loudspeaker.

Numeral 13 in Fig. 1 designates display control means for displaying the received picture file or any other picture file such as moving picture on the display device, while numeral 14 designates audio control means for reproducing the received audio file or many other audio data. The audio control means 14 and the display control means 13 may well be plugged in from the Web server 7 in order to extend the function of the browser means 12. Upon receiving the Web page, the browser means 12 actuates the display control means 13 and the audio control means 14 to reproduce a picture and a audio. Incidentally, the audio control means 14 includes A/D and D/A converters, an amplifier, etc., and it expands encoded audio data, D/A-converts the expanded data and outputs the resulting data after adjusting a sound volume by the amplifier.

Next, numeral 15 designates a storage unit which stores various control programs and various data therein, and which includes a nesting data area 15a. The nesting data area 15a stores therein the display sequence information of individual window displays when a plurality of browser screens are window-displayed on a screen by the operations of the user of the network terminal 1. More specifically, in a case where three browser screens, for example, are window-displayed, the display sequence information indicates how the screens are superposed on the display means, in such a manner that the browser screen (1) lies at the "uppermost position", that the browser screen (2) lies at the "rearmost position" and that the browser screen (3) lies at an "intermediate position". Numeral 16 designates a control unit which controls the network terminal 1. The control unit 16 is constructed using a central processing unit, and it runs the control programs of various functions read out from the storage unit 15. That is, it is constructed as function realization means. Numeral 17 designates input control means for receiving an input by a mouse or an input from a keyboard.

Besides, the network terminal 1 in Embodiment 1 is furnished with the following construction for selecting a audio on the basis of the display sequence information of the window-displayed screens: In Fig. 1, numeral 18 designates a audio function extension unit which is constructed of an applet received from the network camera 2 via the network 4. Incidentally, the audio function extension unit 18 need not always be constructed of the applet, but it may well be previously installed like a plugin which is downloaded from the Web server 7 or the network camera 2.

As shown in Fig. 2, in the audio function extension unit 18, sign 18a denotes interface means with the browser means 12. Besides, the interface means 18a has the function of accessing the network camera 2 through the network control unit 11 in compliance with a request from the browser means 12, so as to receive audio data from the network camera 2. Incidentally, the request from the browser means 12 to the audio function extension unit 18 is made on the basis of the statement of a Web page which the browser means 12 receives from the network camera 2 . When the plurality of browser screens are respectively window-displayed by the browser means 12, audio selection means 18b selects the audio file corresponding to one of the browser screens arranged at the uppermost position (uppermost position in the display sequence) and reproduces the selected audio file from the audio control means 14. Besides, when the plurality of browser screens are window-displayed, nesting acquisition means 18c acquires nesting data indicating the respective display sequence information of the window displays, from the nesting data area 15a. The audio selection means 18b selects only the audio data which is transmitted from the network camera 2 and which corresponds to the browser screen window-displayed at the uppermost position, and it transmits the selected audio data to the audio control means 14.

In a case where a plurality of browser screens are started up by the browser means 12, where the network cameras 2, 2a, 2b, 2c are successively accessed from the respective browser screens, and where Web pages transmitted from these network cameras are displayed on a plurality of windows, the network terminal 1 in Embodiment 1 reproduces by the loudspeaker, a audio from the network camera 2 which corresponds to the window (browser screen) arranged at the uppermost position among the window displays. The audio selection means 18b selects audio data which is transmitted from the network camera 2 and which corresponds to a picture displayed at the uppermost position.

Subsequently, the network camera 2 constituting the network camera system will be described. Referring to Fig. 3, the network camera 2 includes a network control unit 21 which controls the communications of the network camera 2 with the network 4, a Web server portion (imaging server in the present invention) 21a which transmits a Web page in compliance with a request from the network terminal 1, a camera unit 22, an image control unit 23 which compresses image data photographed by the camera unit 22, a microphone 24 which serves to collect a audio from the network camera 2, a loudspeaker 24a which serves to output a audio inputted by the network terminal 1, and a audio control unit 25 which converts a audio analog signal from the microphone 24, into a data signal through A/D conversion, and turns the data signal into a compressed code so as to deliver the code to the network control unit 21. An amplifier is also disposed. A drive control unit 26 performs the drive control of the network camera 2, such as panning or tilting. A storage unit 27 stores control programs and various data therein.

Incidentally, the network camera 2 shown in Fig. 3 has an applet download function or a plugin download function. Sign 27a denotes a program storage area which stores therein an applet program or plugin program (hereinbelow, generally termed the "applet") for emitting the audio of the uppermost window in the network terminal 1. Numeral 28 designates an applet/plugin transmission unit, while numeral 29 designates download means for downloading the applet into the network terminal 1. The download means 29 affixes the applet to an HTML file (embeds the applet by, e. g., the link destination statement of an applet storage location), and transmits the affixed applet to the network terminal 1 via the network 4. The applet/plugin transmission unit 28 is constructed of an applet transmission unit for transmitting the applet, and/or a plugin transmission unit in the case of bestowing the plugin download function. In case of the ordinary network camera 2 which is not furnished with the applet download function, plugin software having the same function as that of the above applet shown in Fig. 2 can be downloaded into the network terminal 1 from that downloading plugin transmission unit of the Web server 7 which includes a source program storage unit and download means (neither of them is shown).

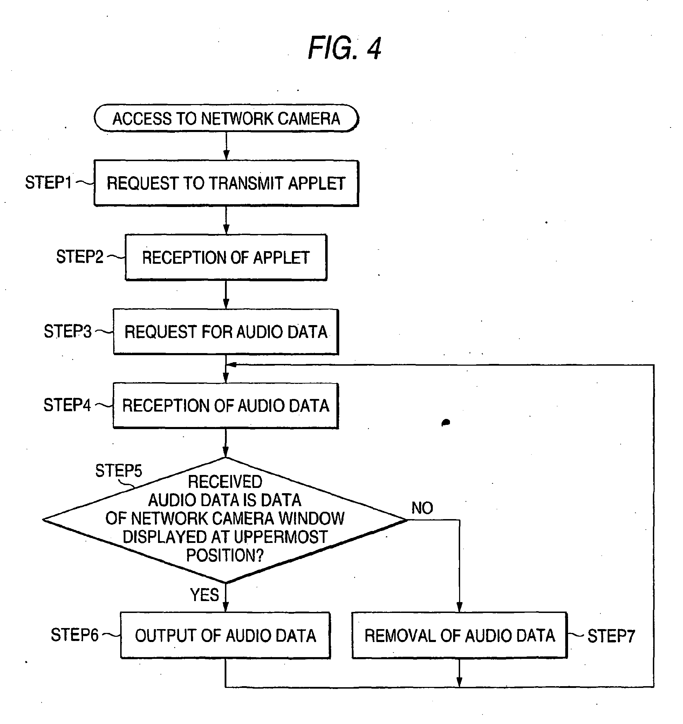

Next, there will be described a reproduction process in the network terminal 1 in the case where the network camera 2 has transmitted the photographed image and recorded audio in Fig. 1. Fig. 4 is a flow chart of the process for associating a window display and a audio in Embodiment 1 of the present invention. The browser means 12 of the network terminal 1 requests the network camera 2 to send a Web page containing an image and a audio, and waits for the transmission of a response to the request, that is, the layout information (such as HTML file) of the Web page. The browser means 12 checks whether or not the response has arrived. When the response has not been transmitted, the browser means 12 returns into a wait status again, and when the response has been transmitted, the browser means 12 requests the network camera 2 to transmit image data and an applet, on the basis of the received layout information (step 1) . The network terminal 1 receives the applet (step 2), and activates the applet so as to generate the audio function extension unit 18 in the network terminal 1. Thereafter, the browser means 12 requests the audio function extension unit 18 to receive audio data from the network camera 2, on the basis of the received layout information. The audio function extension unit 18 having accepted the reception request for the audio data requests the network camera 2 to transmit the audio data, through the network control unit 11 (step 3). The network camera 2 having accepted the request, sequentially transmits the real-time audio data collected by the microphone 24, to the audio function extension unit 18 of the network terminal 1. The interface means 18a of the audio function extension unit 18 receives the transmitted audio data (step 4).

On the other hand, the nesting acquisition means 18c receives nesting data from the nesting data area 15a at a regular cycle, thereby to hold the display sequence information of a browser screen corresponding to the data-source network camera 2 of the audio data. Using the information acquired by the nesting acquisition means 18c, the audio selection means 18b judges if the network camera 2 having transmitted the audio data is the network camera which has transmitted the Web page to the browser screen window-displayed at the uppermost position, on the basis of the data-source IP address or the like of the audio data (step 5). In a case where the network camera 2 is the data-source network camera of the Web page window-displayed at the uppermost position, the audio selection means 18b selects the audio data transmitted from this network camera and transmits the audio data to the audio control means 14 (step 6). In contrast, in a case where the network camera 2 is not the data-source network camera of the Web page window-displayed at the uppermost position, the audio data transmitted from this network camera is discarded (removed) (step 7). Thenceforth, the step 4 through the step 7 are iterated. By the way, in a case where a plurality of network cameras 2 are respectively accessed, the operations of the steps 1 - 7 are performed for each of the network cameras 2, and the audio function extension unit 18 performs the selection control of the audio data of the plurality of network cameras 2.

Incidentally, one browser screen which is window-displayed is made the highest level of the display sequence and is displayed at the uppermost position in such a way that the screen-displayed part thereof is clocked by the mouse. On this occasion, the highest level of the display sequence is switched and is altered to the directly lower level of the display sequence in succession, in such a manner that another browser screen having lain at the uppermost position before the click becomes the second level of the display sequence, and that another browser screen having lain at the second level of the display screen becomes the third level. In consequence of the change of the display sequence, audio data to be outputted is altered to that of the network camera which has been switched to the highest level of the display sequence anew.

It is alsopossible display a audio reproduction start button and a audio reproduction stop button as GUIs on the Web page which is transmitted from the network camera 2. In this way, when the audio reproduction stop button indicated on the window screen is pressed using the mouse or the like, the information of the press is transferred to the audio function extension unit 18, and that audio signal from the network camera 2 for which the audio reproduction stop button has been pressed is not selected irrespective of the display sequence information. Therefore, this measure is especially effective in a case, for example, where the user wants to continue listening to the audio of only one network camera 2, but where he/she wants to watch the pictures of the other two or more network cameras. Incidentally, when the audio reproduction start button is pressed in the pressed state of the audio reproduction stop button, the ordinary operation of the network terminal 1 is resumed.

In this manner, according to the network camera system and its audio output method in Embodiment 1, and the applet therefor, when the images accompanying the audios are simultaneously window-displayed, the audio which corresponds to the image displayed in the uppermost window can be outputted without any special operation. Moreover, only the audio desired to be listened to can be outputted by the simple operation.

The applet/plugin transmission unit is one practical example of a program transmitter in the network camera.

### (EMBODIMENT 2)

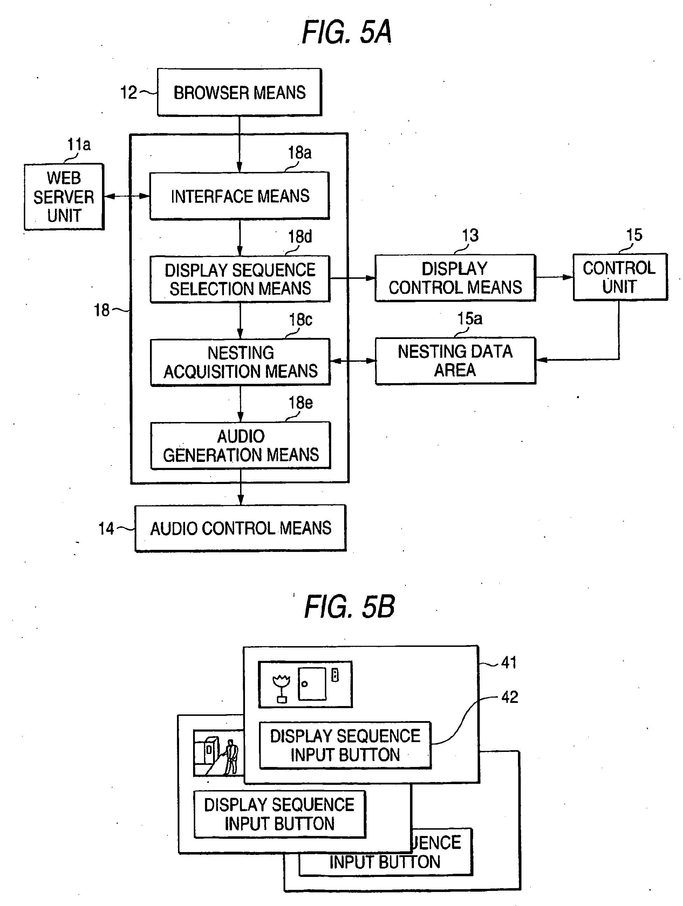

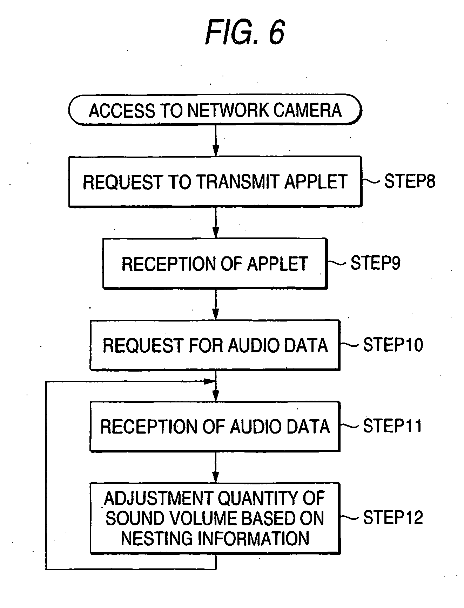

There will be described a network camera system and its audio output method in Embodiment 2 of the present invention, and an applet therefor. Fig. 5A is a block diagram of the applet in Embodiment 2 of the present invention, Fig. 5B is an explanatory view of window display screens each indicating a display sequence input button, and Fig. 6 is a flow chart of a process for associating a window display and a audio in Embodiment 2 of the present invention. The network camera system and its audio output method in Embodiment 2, and the applet therefor are the same in the basic constructions as those of Embodiment 1, and they differ merely in the contents of a audio function extension unit. Therefore, Figs. 1 and 3 shall be referred to also in Embodiment 2.

In the audio function extension unit 18 shown in Fig. 5A, sign 18a denotes interface means similar to that of Embodiment 1, and sign 18c denotes nesting acquisition means. Shown at sign 18d is display sequence selection means for causing display control means 13 to indicate the display sequence input button 42 which will be explained later. Individual windows are displayed on a display device, and the nesting thereof is stored in a nesting data area 15a by a control unit 15.

Sign 18e denotes audio generation means for creating the audios of the individual windows as are reproduced in the network terminal 1 on the basis of the nesting of the respective windows. The audio generation means 18e generates audios by mixing individual audio data which have been received by affording the largest weight to the audio of the window displayed at the uppermost position, the second weight to the second window, the third weight to the third window, . The weighted audio data are sent to audio control means 14 and have their sound volumes adjusted by an amplifier, and they are reproduced from a loudspeaker successively in units of 125 µsec. Apart from the sound volumes, frequencies etc. can also be adjusted.

Fig. 5B is the view for explaining a situation where a plurality of window-displayed browser screens are displayed in superposition. Numeral 41 designates each window screen, and numeral 42 designates the display sequence input button provided in each window.

In a case where network cameras 2, 2a, 2b, 2c are successively accessed by browser means 12, and where the plurality of windows 41 are displayed, a network terminal 1 in Embodiment 2 reproduces from the loudspeaker the mixed audios whose sounds become larger in the sequence in which the display sequence input buttons 42 have been clicked.

Subsequently, there will be described the steps of receiving a plurality of images and audios photographed and recorded by the network cameras 2, 2a, 2b, 2c, and reproducing the audios from the network terminal 1. As shown in Fig. 6, the browser means 12 of the network terminal 1 requests the network camera 2 to send a Web page containing an image and a audio, and it waits for the transmission of a response to the request, that is, the layout information (such as HTML file) of the Web page. The browsermeans 12 checks whether or not the response has arrived. When the response has not been transmitted, the browser means 12 returns into a wait status again, and when the response has been transmitted, the browser means 12 requests the network camera 2 to transmit image data and an applet, on the basis of the received layout information (step 8). The network terminal 1 receives the applet (step 9), and activates the applet so as to generate the audio function extension unit 18 in the network terminal 1. Thereafter, the browser means 12 requests the audio function extension unit 18 to receive audio data from the network camera 2, on the basis of the received layout information. The audio function extension unit 18 having accepted the reception request for the audio data requests the network camera 2 to transmit, the audio data, through the network control unit 11 (step 10). The network camera 2 having accepted the request, sequentially transmits the real-time audio data collected by the microphone 24, to the audio function extension unit 18 of the network terminal 1. The interface means 18a of the audio function extension unit 18 receives the transmitted audio data (step 11).

On the other hand, the nesting acquisitionmeans 18c receives nesting data from the nesting data area 15a at a regular cycle, thereby to hold the display sequence of a browser screen corresponding to the data-source network camera 2 of the audio data. Using the information acquired by the nesting acquisition means 18c, the audio generation means 18e judges the adjustment quantity of the sound volume of the audio data and increases or decreases the sound volume of the audio data, on the basis of the nesting information of the network camera 2 having transmitted the audio data. Thereafter, the audio generation means 18e mixes the resulting audio data with the audio data of the other network cameras 2 subjected to sound volume adjustments, and it transmits the mixed audio data to the audio control means 14 (step 12) . Thenceforth, the operations of the steps 11 and 12 are iterated.

By the way, in a case where the display sequence input button 42 has been clicked, the audio data of the network camera corresponding to the clicked window display is preferred to that of the network camera conforming to the nesting information. That is, even when any network camera has the highest level of the display sequence (lies at the uppermost position on the screen) in conformity with the nesting information, larger weights are afforded sequentially from the network camera for which the display sequence input button has been pressed. Besides, the display sequence input buttons 42 need not always be displayed by the display sequence selection means 18d, but they can naturally be previously displayed as GUIs on Web pages which are transmitted from the network cameras 2. On this occasion, when any display sequence input button 42 has been clicked by the mouse or the like, the information of the press of the button 42 is notified to the audio function extension unit 18 through the browser means 12, and the priority level of the output of the audio data to the audio control means 14 is judged by the audio function extension unit 18.

In this manner, according to the network camera system and its audio output method in Embodiment 2, and the applet therefor, in the case where a plurality of Web servers such as the network cameras have been accessed and where the Web pages are given as the plurality of window displays, the audios can be outputted so that the audio corresponding to the image of the uppermost window may become the loudest, and that the audios corresponding to the images of the remaining windows displayed rearwards may become lower owing to the weights which are smaller at the rearer positions of the windows.

Besides, when the display sequence input button of any window is clicked, the weight of the corresponding audio can be preferentially loudened. Therefore, even in a case where the user wants to continue listening to the audio, but where he/she has moved another window to the uppermost position in order to browse the image thereof, the audio of the window whose display sequence input button has been clicked can be heard loudly.

### (EMBODIMENT 3)

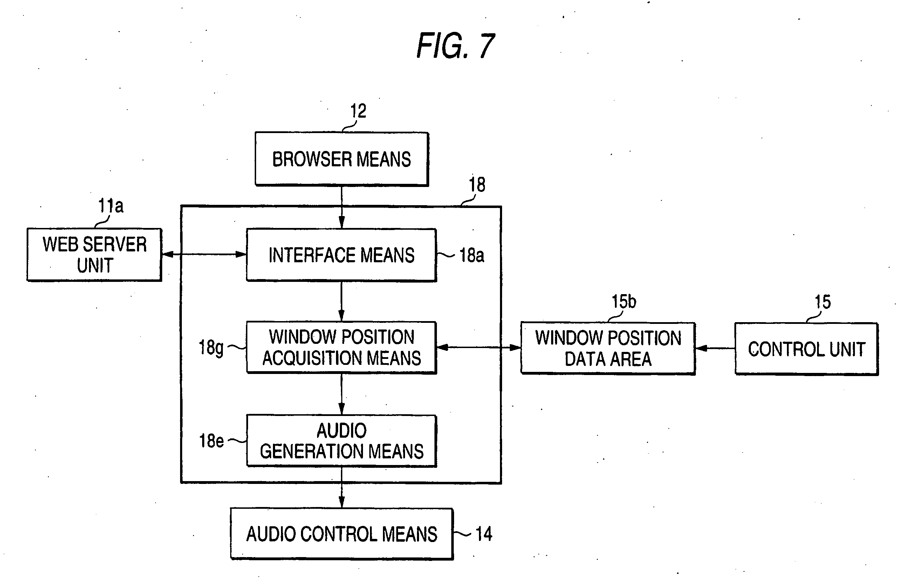

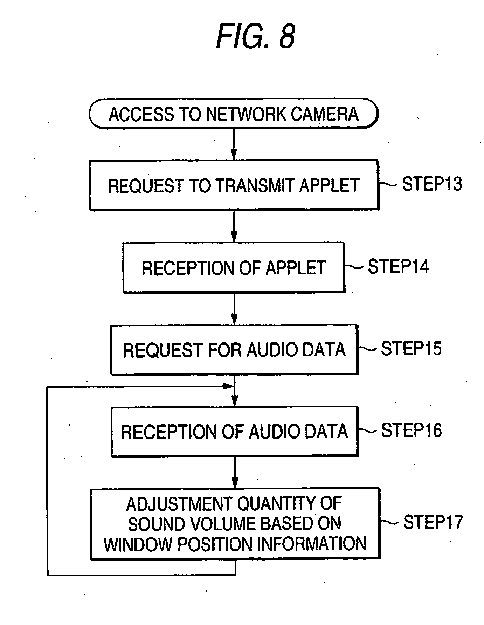

There will be described a network camera system and its audio output method in Embodiment 3 of the present invention, and an applet therefor. Fig. 7 is a block diagram of the applet in Embodiment 3 of the present invention, and Fig. 8 is a flow chart of a process for associating a window display and a audio in Embodiment 3 of the present invention. The network camera system and its audio output method in Embodiment 3, and the applet therefor are the same in the basic constructions as those of each of Embodiments 1 and 2, and they differ merelyin the contents of a audio function extension unit. Therefore, Figs. 1 and 3 shall be referred to also in Embodiment 3.

Referring to Fig. 7, sign 15b denotes a window position data area which stores therein positions where the window screens of individual browsers are displayed. Besides, a constituent 18a in the audio function extension unit 18 is interface means, and a constituent 18e is audio generation means. The audio generation means 18e expands individual received audio data by affording weights in accordance with the distances between the center positions of individual windows and the center position of a display device, and it mixes the expanded audio data. Incidentally, it is suitable to adopt distances in the lateral width direction of the display device as the distances for the weights. The mixed audio data are sent to audio control means 14, and are reproduced from a loudspeaker.

Shown at sign 18g is window position acquisition means for acquiring the display positions of the respective window screens from the window position data area 15b. On the basis of the respective window positions detected by the window position acquisition means 18g, the audio generation means 18e sends the weighted audio data to the audio control unit 14, and corresponding audios have their sound volumes adjusted by an amplifier and are reproduced successively in units of 125 µsec.

Subsequently, there will be described the steps of receiving a plurality of images and audios photographed and recorded by the network cameras 2, 2a, 2b, 2c, and reproducing the audios by altering the positions of windows in the network terminal 1. As shown in Fig. 8, the network terminal 1 requests the network camera 2 to send an image and a audio, and it waits for the arrival of a response to the request. Concretely, the browser means 12 of the network terminal 1 requests the network camera 2 to send an image and a audio, and it waits for the transmission of a response to the request, that is, the layout information (such as HTML file) of a Web page. The browser means 12 checks whether or not the response has arrived. When the response has not been transmitted, the browser means 12 returns into a wait status again, and when the response has been transmitted, the browser means 12 requests the network camera 2 to transmit image data and an applet, on the basis of the received layout information (step 13). The network terminal 1 receives the applet (step 14), and activates the applet so as to generate the audio function extension unit 18 in the network terminal 1. Thereafter, the browser means 12 requests the audio function extension unit 18 to receive audio data from the network camera 2, on the basis of the received layout information. The audio function extension unit 18 having accepted the reception request for the audio data requests the network camera 2 to transmit the audio data, through a network control unit 11 (step 15). The network camera 2 having accepted the request, sequentially transmits the real-time audio data collected by a microphone 24, to the audio function extension unit 18 of the network terminal 1. The interface means 18a of the audio function extension unit 18 receives the transmitted audio data (step 16).

On the other hand, the window position acquisition means 18g receives the position data of individual window screens from the window position data area 15b at a regular cycle. On the basis of the window-screen position data, the audio generation means 18e weights the audio data received from the individual network cameras 2, that is, it adjusts the sound volumes of the respective audio data. Further, the audio data subjected to the sound volume adjustments are added and mixed by the audio generation means 18e, and the mixed audio data are outputted to the audio control means 14 (step 17). Thenceforth, the steps 16 and 17 are iterated.

Incidentally, one browser screen which is window-displayed can have its displayed screen position altered by a mouse or the like, and the information of the position alteration is stored in the window position data area 15b on occasion. Besides, the audio data may well be weighted by combining nesting information and window position information. Further, when the sound volumes are weighted separately for a right loudspeaker and a left loudspeaker, favorably which of the window screens the audio outputs from the network cameras correspond to is easily known.

In this manner, according to the network camera system and its audio output method in Embodiment 3, and the applet therefor, when the response has been received in the case of simultaneously window-displaying the images accompanying the audios, the audios can be outputted without any special operation so that the audio corresponding to the.image of the window nearest the center of the screen may become the loudest, and that the audios of the remaining remoter windows may have lower levels which correspond to the distances of the respective windows from the screen center.

### <INDSUTRIAL APPLICABILITY>

As described above, according to the network camera system of the present invention, an applet or a plugin downloaded from a network camera performs a control so as to emit audios sent from network cameras being displayed in a network terminal. Therefore, in a case where an image/a audio photographed and recorded by a certain network camera are to be reproduced in the network terminal, only the audio from the network camera can be outputted by designating the image of this network camera. Since the images and the audios can be outputted in association by the applet or the plugin, a situation where which of the images the audios correspond to is not known because the audios are mixed and reproduced can be avoided without requiring any special operation on the side of the terminal.

When a plurality of windows respectively displaying images are displayed in the network terminal, the applet or the plugin performs a control so as to reproduce only the audio of the uppermost window. Thus, in a case where an image/a audio photographed and recorded by a certain network camera are to be reproduced in the network terminal, only the audio from the network camera can be outputted merely by locating the window displaying the image of this network camera, at the uppermost position.

Besides, the applet or the plugin indicates input means capable of inputting a window display sequence, on each window screen for displaying an image in the network terminal, and it performs a control so as to adjust and then reproduce a audio in accordance with the window display sequence inputted through the input means. Thus, the audio of the image of the uppermost window is reproduced loudly, and the audios of the images of the rearer windows are reproduced lower in accordance with the display sequence, merely by performing a simple operation on the network terminal. Therefore, the adjustments of the audios are attained, and the balanced audios can be reproduced.

Further, the applet or the plugin indicates a audio reproduction start button and a audio reproduction stop button on each window screen for displaying an image in the network terminal, and it performs a control so as to select the output and stop of a audio through the buttons. Thus, only the audio desired to be listened to can be reproduced merely by performing the simple operation of pressing the button on the network terminal. This aspect is effective in a case where a user wants to continue listening to the audio of only one network camera, but where he/she wants to watch the pictures of a plurality of other network cameras.

Still further, the applet or the plugin computes the distance between the center position of each window for displaying an image in the network terminal and the center position of a display device, and it performs a control so as to adjust and reproduce audios in accordance with the computed distances, when a plurality of windows are displayed. Thus, the audio of the window having the shortest distance from the center of the display device is reproduced loudly, and the audios of the windows having longer distances are reproduced lower, merely by performing a simple operation. Therefore, the adjustments of the audios are attained, and the balanced audios can be reproduced.

Yet further, in a network camera, a loudspeaker for reproducing audio data transmitted from a network terminal is included, whereby a audio sent from the network terminal can be reproduced by the network camera.

In addition, the applet or the plugin indicates an input button capable of inputting a window display sequence, on each window screen for displaying an image in the network terminal, it weights audios in accordance with the window display sequence inputted through the input buttons, and it performs a control so as to adjust and reproduce audios in accordance with the weights. Thus, the audio of the image of the uppermost window is reproduced loudly, and the audios of the images of the rearer windows are reproduced lower in accordance with the display sequence, merely by performing simple operations. Therefore, the adjustments of the audios are attained, and the balanced audios can be reproduced.

Still in addition, in a network terminal, when images and audios photographed and recorded by network cameras are to be reproduced in the network terminal, browser means in the network terminal is extended by an applet transmitted from the network camera. Therefore, the images and the audios can be outputted in association without requiring any special operation on the side of the network terminal, and it is possible to avoid a situation where which of the images the audios correspond to is not known because the audios are mixed and reproduced.

Yet in addition, in a network terminal, audio data are selected on the basis of the display sequence information of a plurality of Web pages acquired by nesting acquisition means, and the selected audio data are reproduced. Therefore, the images and the audios can be outputted in association without requiring any special operation on the side of the network terminal, and it is possible to avoid a situation where which of the images the audios correspond to is not known because the audios are mixed and reproduced. Moreover, since only the audio of the image of the uppermost window is reproduced, it is possible to avoid the situation where which of the images the audios correspond to is not known because the audios are mixed and reproduced. Furthermore, the audio of the image of the uppermost window is reproduced loudly, and the audios of the images of the rearer windows are reproduced lower in accordance with the display sequence information. Therefore, the adjustments of the audios are attained, and the balanced audios can be reproduced.

Besides, in a network terminal, a program is installed for functioning as interface means capable of accessing a plurality of imaging servers in compliance with requests from a browser, and having the function of receiving audio data from the plurality of imaging servers, respectively, nesting acquisition means for acquiring the display sequence information of individual Web pages transmitted from the plurality of imaging servers, and audio selection means for selecting and reproducing the audio data on the basis of the display sequence information of the plurality of Web pages as acquired by the nesting acquisition means. Thus, the audio data are selected and reproduced on the basis of the display sequence information of the plurality of Web pages as acquired by the nesting acquisition means. Therefore, images and audios can be outputted in association without requiring any special operation on the side of the network terminal, and it is possible to avoid a situation where which of the images the audios correspond to is not known because the audios are mixed and reproduced.

Further, in the above audio selection means, only the audio data corresponding to the imaging server of the Web page whose display sequence information specifies the uppermost position is selected. Thus, only the audio of the image of the uppermost window canbe reproduced without performing any special operation, and it is possible to avoid the situation where which of the images the audios correspond to is not known because the audios are mixed and reproduced.

Still further, in the above audio selection means, instead of the selection of the audio data, the audio data received from the plurality of imaging servers are respectively weighted on the basis of the display sequence information, and the weighted audio data are reproduced. Thus, the audio of the image of the uppermost window is reproduced loudly, and the audios of the images of the rearer windows are reproduced lower in accordance with the display sequence information. Therefore, the adjustments of the audios are attained, and the balanced audios can be reproduced.

## Claims

1. A network camera system, comprising:
plural network cameras (2, 2a, 2b, 2c) having microphones (24), each of the plural network cameras (2, 2a, 2b, 2c) storing a program for outputting layout information of an image taken by each of said plural network cameras and outputting audio data collected by respective microphones of said network cameras; and
a terminal device (1) for receiving the layout information corresponding to one network camera of said plural network cameras from said one network camera,
wherein link destination information, which shows a storage place of the program, is embedded in the layout information, and
wherein the terminal device is adapted to display said image from said one network camera on a display device, to receive the program, which corresponds to the layout information, from said one network camera on the basis of the link destination information embedded in the layout information, to input audio data collected by a microphone of said one network camera, which corresponds to the layout information, and to output said audio data from the terminal device on the basis of the program.

2. The network camera system according to Claim 1, wherein the program is an applet or a plug-in.

3. The network camera system according to Claim 1, wherein the program is adapted to output only audio data which correspond to an image located in the foreground, among plural images displayed on the screen.

4. The network camera system according to Claim 1, wherein the program is adapted to delete audio data which are transmitted from the camera which does not correspond to an image displayed in the foreground.

5. The network camera system according to Claim 1, wherein the program is adapted to output audio data of an image displayed in the center of the screen with the largest sound volume, among plural camera images displayed on the screen of the terminal device.

6. The network camera system according to Claim 1, wherein the program is adapted to output audio data of an image with gradually reducing a sound volume, as it is displayed at a position deviated from the center position of the screen, among plural camera images displayed on the terminal device.

7. The network camera system according to Claim 1, wherein the terminal device has a storage section (15) for storing display order information that shows an order on the occasion of displaying plural images transmitted from the plural cameras on the terminal device, respectively.

8. The network camera system according to Claim 1, wherein the program is adapted to display an audio reproduction start or stop button which changes over audio outputs of the displayed plural images on the screen.

9. The network camera system according to Claim 8, wherein the program is adapted to stop reproduction of audio data which correspond to an image, for which the audio reproduction stop button is selected.

10. The network cameras system according to Claim 8, wherein the program is adapted to reproduce audio data which correspond to an image, for which the sound reproduction start button is selected.

11. The network camera system according to Claim 1, wherein the program is adapted to display a button (42), by which a display order on the occasion of displaying images transmitted from the plural cameras on the screen is inputted, on the screen.

12. The network camera system according to Claim 11, wherein the program is adapted to adjust a sound volume from the microphone, in accordance with the display order of the plural camera images which is specified by the input button, to output said audio data so as to become larger or smaller gradually.

13. The network camera system according to Claim 1, wherein the program, on the occasion that it selects any one of plural images transmitted from the plural cameras, is adapted to display the selected image in the foreground, to display other images behind the selected image, to adjust a sound volume of audio data collected by the camera depending on a display order of images and to output said audio data said audio data so as to become larger or smaller gradually.

14. The network camera system according to Claim 1, wherein the layout information is HTML data.

15. An audio reproduction method for displaying photographic subjects imaged by plural network cameras (2, 2a, 2b, 2c) on a screen of a terminal device (1) and outputting audio data collected by respective microphones of said network cameras from the terminal device, comprising:
storing a program for outputting layout information of an images taken by each of said plural network cameras, and
outputting audio data collected by said microphones of each of said plural network cameras,
wherein link destination information, which shows a storage place of the program, is embedded in the layout information, and
wherein the terminal device displays said image from said one network camera on a display device, receives the program, which corresponds to the layout information, from said one network camera on the basis of the link destination information embedded in the layout information, inputs audio data collected by a microphone of said one network camera, which corresponds to the layout information, and output said audio data said audio data on the basis of the program.

16. The audio reproduction method according to Claim 15, wherein the program is an applet or a plug-in.

17. The audio reproduction method according to Claim 15, wherein the program is adapted to output only audio data which correspond to an image located in the foreground, among plural images displayed on the screen.

18. The sound reproduction method according to Claim 15, wherein the program is adapted to delete audio data which are transmitted from the camera which does not corresponds to an image displayed in the foreground.

19. The audio reproduction method according to Claim 15, wherein the program is adapted to output audio data of an image displayed in the center of the screen with the largest sound volume, among plural camera images displayed on the screen of the terminal device.

20. The audio reproduction method according to Claim 15, wherein the program is adapted to output audio data of an image with gradually reducing a sound volume, as it is displayed at a position deviated from the center position of the screen, among plural camera images displayed on the screen of the terminal device.

21. The audio reproduction method according to Claim 15, wherein the terminal device has a storage section (15) for storing display order information that shows an order on the occasion of displaying plural images transmitted from the plural cameras on the screen of the terminal device, respectively.

22. The audio reproduction method according to Claim 15, wherein the program is adapted to display an audio reproduction start or stop button which changes over audio outputs of the displayed plural images on the screen.

23. the audio reproduction method according to Claim 22, wherein the program is adapted to stop reproduction of audio data which correspond to an image, for which the audio reproduction stop button is selected.

24. The audio reproduction method according to Claim 22, wherein the program is adapted to reproduce a audio data which correspond to an image, for which the sound reproduction start button is selected.

25. The audio reproduction method according to Claim 15, wherein the program is adapted to display a button (42), by which a display order on the occasion of displaying images transmitted from the plural cameras on the screen is inputted, on the screen.

26. The audio reproduction method according to Claim 25, wherein the program is adapted to adjust a sound volume from the microphone, in accordance with the display order of the plural camera images which is specified by the input button, to output said audio data so as to become larger or smaller gradually.

27. The audio reproduction method according to Claim 15, wherein the program, on the occasion that the program selects any one of plural images transmitted from the plural cameras, is adapted to display the selected image in the foreground, to display other images behind the selected image, to adjust a sound volume of audio data collected by the camera depending on a display order of images and to output it so as to become larger or smaller gradually.

28. The audio reproduction method according to Claim 15, wherein the layout information is HTML data.

## Patentansprüche

1. Ein Netzwerkkamerasystem mit:
mehreren Netzwerkkameras (2, 2a, 2b, 2c) mit Mikrofonen (24), wobei
jede der mehreren Netzwerkkameras (2, 2a, 2b, 2c) ein Programm zum Ausgeben einer Layout-Information eines Bildes speichert, welches durch jede der mehreren Netzwerkkameras aufgenommen ist, und Ausgeben von Audiodaten, die durch entsprechende Mikrofone der Netzwerkkameras gesammelt sind; und
einer Terminalvorrichtung (1) zum Empfangen der Layoutinformation, die einer Netzwerkkamera der mehreren Netzwerkkameras entspricht, von der einen Netzwerkkamera,
wobei eine Linkzielinformation, die einen Speicherplatz des Programms zeigt, in der Layoutinformation eingebettet ist und,
wobei die Terminalvorrichtung geeignet ist zum Anzeigen des Bildes von der einen Netzwerkkamera auf einer Anzeigevorrichtung, zum Empfangen des Programms, welches der Layoutinformation entspricht, von der einen Netzwerkkamera auf der Basis der Linkzielinformation, die in der Layoutinformation eingebettet ist, zum Eingeben von Audiodaten, die durch ein Mikrofon der einen Netzwerkkamera gesammelt werden, die der Layoutinformation entsprechen, und zum Ausgeben dieser Audiodaten von der Terminalvorrichtung auf Basis des Programms.

2. Netzwerkkamerasystem nach Anspruch 1, wobei das Programm ein Applet oder ein Plug-in ist.

3. Netzwerkkamerasystem nach Anspruch 1, wobei das Programm geeignet ist zum Ausgeben von nur Audiodaten, welche einem Bild entsprechen, welches in dem Vordergrund angeordnet ist, unter mehreren Bildern, die auf dem Bildschirm angezeigt werden.

4. Netzwerkkamerasystem nach Anspruch 1, wobei das Programm geeignet ist zum Löschen von Audiodaten, die von der Kamera übertragen werden, die nicht einem Bild entsprechen, welches in dem Vordergrund angezeigt wird.

5. Netzwerkkamerasystem nach Anspruch 1, wobei das Programm geeignet ist zum Ausgeben von Audiodaten eines Bildes, welches in dem Zentrum des Bildschirmes mit der größten Tonlautstärke angezeigt wird, unter den Kamerabildern, die auf dem Bildschirm der Terminalvorrichtung angezeigt werden.

6. Netzwerkkamerasystem nach Anspruch 1, wobei das Programm geeignet ist zum Ausgeben von Audiodaten eines Bildes mit einem graduellen Reduzieren einer Tonlautstärke, wenn es an einer Position angezeigt wird, die von der zentralen Position des Bildschirmes abweicht, unter mehreren Kamerabildern, die auf der Terminalvorrichtung angezeigt werden.

7. Netzwerkkamerasystem nach Anspruch 1, wobei die Terminalvorrichtung einen Speicherabschnitt (15) zum Speichern einer Anzeigeordnungsinformation aufweist, die eine Ordnung des Ereignisses von Anzeigen von mehreren Bildern zeigt, die jeweils von den mehreren Kameras auf dir Terminalvorrichtung übertragen sind.

8. Netzwerkkamerasystem nach Anspruch 1, wobei das Programm geeignet ist zum Anzeigen eines Audiowiedergabestart- oder Stoppknopfes, welcher sich über Audioausgänge der angezeigten mehreren Bilder auf dem Bildschirm verändert.

9. Netzwerkkamerasystem nach Anspruch 8, wobei das Programm geeignet ist zum Stoppen einer Wiedergabe von Audiodaten, welche einem Bild entsprechen, für das der Audiowiedergabestoppknopf gewählt wird.

10. Netzwerkkamerasystem nach Anspruch 8, wobei das Programm geeignet ist zum Wiedergeben von Audiodaten, welche einem Bild entsprechen, für welches der Tonwiedergabestartknopf gewählt wird.

11. Netzwerkkamerasystem nach Anspruch 1, wobei das Programm geeignet ist zum Anzeigen eines Knopfes (42), durch welchen eine Anzeigeordnung des Ereignisses von Anzeigen von Bildern, die von den mehreren Kameras auf den Bildschirm übertragen sind, eingegeben wird, auf dem Bildschirm.

12. Netzwerkkamerasystem nach Anspruch 11, wobei das Programm geeignet ist zum Anpassen einer Tonlautstärke von dem Mikrofon gemäß der Anzeigeordnung der mehreren Kamerabilder, die durch den Eingabeknopf spezifiziert wird, zum Ausgeben dieser Audiodaten, so dass sie graduell größer oder kleiner wird.

13. Netzwerkkamerasystem nach Anspruch 1, wobei das Programm bei dem Ereignis, dass es eines von mehreren Bildern auswählt, welche von den mehreren Kameras übertragen sind, geeignet ist zum Anzeigen des ausgewählten Bildes in dem Vordergrund, zum Anzeigen anderer Bilder hinter dem ausgewählten Bild, zum Anpassen einer Tonlautstärke von Audiodaten, die durch die Kamera gesammelt ist, in Abhängigkeit von einer Anzeigeordnung von Bildern und zum Ausgeben dieser, so dass sie graduell größer oder kleiner wird.

14. Netzwerkkamerasystem nach Anspruch 1, wobei die Layoutinformation HTML-Daten sind.

15. Audiowiedergabeverfahren zum Anzeigen von fotografischen Subjekten, die durch mehrere Netzwerkkameras (2, 2a, 2b, 2c) aufgenommen sind, auf einem Bildschirm einer Terminalvorrichtung (1) und Ausgeben von Audiodaten, die durch entsprechende Mikrofone der Netzwerkkameras von der Terminalvorrichtung gesammelt sind, mit:
Speichern eines Programmes zum Ausgeben einer Layoutinformation eines Bildes, welches durch jede der mehreren Netzwerkkameras aufgenommen ist, und
Ausgeben von Audiodaten, die durch das Mikrofon von jedem der mehreren Netzwerkkameras gesammelt sind,
wobei eine Linkzielinformation, die einen Speicherplatz des Programmes zeigt, in der Layoutinformation eingebettet ist, und
wobei die Terminalvorrichtung das Bild von der einen Netzwerkkamera auf einer Anzeigevorrichtung anzeigt, das Programm empfängt, welches der Layoutinformation entspricht, von der einen Netzwerkkamera auf der Basis der Linkzielinformation, die in der Layoutinformation eingebettet ist, Audiodaten, die durch ein Mikrofon der einen Netzwerkkamera gesammelt sind, eingibt, welcher der Layoutinformation entspricht, und diese Audiodaten auf Basis des Programms ausgibt.

16. Audiowiedergabeverfahren nach Anspruch 15, wobei das Programm ein Applet oder ein Plug-in ist.

17. Audiowiedergabeverfahren nach Anspruch 15, wobei das Programm geeignet ist zum Ausgeben von nur Audiodaten, die einem Bild entsprechen, welches in dem Vordergrund angeordnet ist, hinter mehreren Bildern, die auf dem Bildschirm angezeigt werden.

18. Audiowiedergabeverfahren nach Anspruch 15, wobei das Programm geeignet ist zum Löschen von Audiodaten, welche von der Kamera übertragen werden, die nicht einem Bild entsprechen, welches in dem Vordergrund angezeigt wird.

19. Audiowiedergabeverfahren nach Anspruch 15, wobei das Programm geeignet ist zum Ausgeben von Audiodaten eines Bildes, welches in dem Zentrum des Bildschirmes mit der größten Tonlautstärke angezeigt wird, unter mehreren Kamerabildern, die auf dem Bildschirm der Terminalvorrichtung angezeigt werden.

20. Audiowiedergabeverfahren nach Anspruch 15, wobei das Programm geeignet ist zum Ausgeben von Audiodaten eines Bildes mit einem graduellen Reduzieren einer Tonlautstärke, wenn es an einer Position angezeigt wird, die von der zentralen Position auf dem Bildschirm abweicht, unter mehreren Kamerabildern, die auf dem Bildschirm der Terminalvorrichtung angezeigt werden.

21. Audiowiedergabeverfahren nach Anspruch 15, wobei die Terminalvorrichtung einen Speicherabschnitt (15) zum Speichern von einer Anzeigeordnungsinformation aufweist, die eine Ordnung des Ereignisses eines Anzeigens von mehreren Bildern zeigt, die von den mehreren Kameras übertragen sind, jeweils auf dem Bildschirm der Terminalvorrichtung.

22. Audiowiedergabeverfahren nach Anspruch 15, wobei das Programm geeignet ist zum Anzeigen eines Audiowiedergabestart- oder stoppknopfes, welcher sich über Audioausgaben der mehreren angezeigten Bildern auf dem Bildschirm verändert.

23. Audiowiedergabeverfahren nach Anspruch 22, wobei das Programm geeignet ist zum Stoppen einer Wiedergabe von Audiodaten, welche einem Bild entsprechen, für welches der Audiowiedergabestoppknopf gewählt wird.

24. Audiowiedergabeverfahren nach Anspruch 22, wobei das Programm geeignet ist zum Wiedergeben von Audiodaten, welche einem Bild entsprechen, für welches der Tonwiedergabestartknopf gewählt wird.

25. Audiowiedergabeverfahren nach Anspruch 15, wobei das Programm geeignet ist zum Anzeigen eines Knopfes (42), durch welche eine Anzeigeordnung des Ereignisses eines Anzeigens von Bildern, die von den mehreren Kameras übertragen sind, auf dem Bildschirm eingegeben wird, auf dem Bildschirm.

26. Audiowiedergabeverfahren nach Anspruch 25, wobei das Programm geeignet ist zum Anpassen einer Tonlautstärke von dem Mikrofon gemäß der Anzeigeordnung der mehreren Kamerabilder, welche durch den Eingabeknopf spezifiziert wird, um diese Audiodaten so auszugeben, dass sie graduell größer oder kleiner wird.

27. Audiowiedergabeverfahren nach Anspruch 15, wobei das Programm bei dem Ereignis, dass das Programm eines von mehreren Bildern auswählt, welche von den mehreren Kameras übertragen sind, geeignet ist zum Anzeigen des gewählten Bildes in dem Vordergrund, zum Anzeigen anderer Bilder hinter dem ausgewählten Bild, zum Anpassen einer Tonlautstärke von Audiodaten, die durch die Kamera in Abhängigkeit von einer Anzeigeordnung von Bildern gesammelt sind, und zum Ausgeben dieser, so dass sie graduell größer oder kleiner wird.

28. Audiowiedergabeverfahren nach Anspruch 15, wobei die Layoutinformation HTML-Daten sind.

## Revendications

1. Système de caméras en réseau, comprenant :
plusieurs caméras en réseau (2, 2a, 2b, 2c) comportant des microphones (24), chacune desdites plusieurs caméras en réseau (2, 2a, 2b, 2c) stockant un programme pour émettre en sortie une information d'implantation d'une image prise par chacune desdites plusieurs caméras en réseau et pour émettre en sortie des données audio collectées par des microphones respectifs desdites caméras en réseau ; et
un dispositif de terminal (1) pour recevoir l'information d'implantation correspondant à une caméra en réseau desdites plusieurs caméras en réseau, en provenance de ladite une caméra en réseau,
dans lequel une information de destination de lien qui représente un site de stockage du programme est noyée dans l'information d'implantation ; et
dans lequel le dispositif de terminal est adapté pour afficher ladite image en provenance de ladite une caméra en réseau sur un dispositif d'affichage, pour recevoir le programme qui correspond à l'information d'implantation en provenance de ladite une caméra en réseau sur la base de l'information de destination de lien qui est noyée dans l'information d'implantation, pour entrer les données audio collectées par un microphone de ladite une caméra en réseau, correspondant à l'information d'implantation et pour émettre lesdites données audio en sortie depuis le dispositif de terminal sur la base du programme.

2. Système de caméras en réseau selon la revendication 1, dans lequel le programme est un applet ou un plugiciel.

3. Système de caméras en réseau selon la revendication 1, dans lequel le programme est adapté pour émettre en sortie seulement des données audio qui correspondent à une image qui est localisée dans l'arrière-plan, parmi plusieurs images qui sont affichées sur l'écran.

4. Système de caméras en réseau selon la revendication 1, dans lequel le programme est adapté pour supprimer des données audio qui sont transmises depuis la caméra, lesquelles ne correspondent pas à une image qui est affichée dans l'arrière-plan.

5. Système de caméras en réseau selon la revendication 1, dans lequel le programme est adapté pour émettre en sortie des données audio d'une image qui est affichée dans le centre de l'écran selon le volume de son le plus important, parmi plusieurs images de caméra qui sont affichées sur l'écran du dispositif de terminal.

6. Système de caméras en réseau selon la revendication 1, dans lequel le programme est adapté pour émettre en sortie des données audio d'une image tout en réduisant de façon progressive un volume de son, lorsqu'elle est affichée en une position qui est déviée par rapport à la position centrale de l'écran, parmi plusieurs images de caméra qui sont affichées sur le dispositif de terminal.

7. Système de caméras en réseau selon la revendication 1, dans lequel le dispositif de terminal comporte une section de stockage (15) pour stocker une information d'ordre d'affichage qui représente un ordre de survenue d'affichage de plusieurs images qui sont transmises depuis les plusieurs caméras sur le dispositif de terminal, de façon respective.

8. Système de caméras en réseau selon la revendication 1, dans lequel le programme est adapté pour afficher un bouton de début ou d'arrêt de reproduction audio qui permute les sorties audio des plusieurs images affichées sur l'écran.

9. Système de caméras en réseau selon la revendication 8, dans lequel le programme est adapté pour arrêter la reproduction de données audio qui correspondent à une image, données pour lesquelles le bouton d'arrêt de reproduction audio est sélectionné.

10. Système de caméras en réseau selon la revendication 8, dans lequel le programme est adapté pour reproduire des données audio qui correspondent à une image, données pour lesquelles le bouton de début de reproduction de son est sélectionné.

11. Système de caméras en réseau selon la revendication 1, dans lequel le programme est adapté pour afficher un bouton (42) au moyen duquel un ordre d'affichage lors de la survenue de l'affichage d'images transmises depuis les plusieurs caméras sur l'écran est entré, sur l'écran.

12. Système de caméras en réseau selon la revendication 11, dans lequel le programme est adapté pour régler un volume de son en provenance du microphone, conformément à l'ordre d'affichage des plusieurs images de caméra, lequel ordre est spécifié au moyen du bouton d'entrée, pour émettre lesdites données audio en sortie de manière à ce qu'il devienne progressivement plus important ou plus faible.

13. Système de caméras en réseau selon la revendication 1, dans lequel le programme, lorsqu'il sélectionne l'une quelconque de plusieurs images qui sont transmises depuis les plusieurs caméras, est adapté pour afficher l'image sélectionnée dans l'arrière-plan, pour afficher d'autres images derrière l'image sélectionnée, pour régler un volume de son de données audio qui sont collectées par la caméra en fonction d'un ordre d'affichage des images et pour émettre lesdites données audio en sortie de manière à ce qu'il devienne progressivement plus important ou plus faible.

14. Système de caméras en réseau selon la revendication 1, dans lequel l'information d'implantation est constituée par des données HTML.

15. Procédé de reproduction audio pour afficher des sujets photographiques imagés au moyen de plusieurs caméras en réseau (2, 2a, 2b, 2c) sur un écran d'un dispositif de terminal (1) et pour émettre en sortie des données audio collectées par des microphones respectifs desdites caméras en réseau depuis le dispositif de terminal, comprenant :
le stockage d'un programme pour émettre en sortie une information d'implantation d'images qui sont prises par chacune desdites plusieurs caméras en réseau ; et
l'émission en sortie des données audio qui sont collectées par ledit microphone de chacune desdites plusieurs caméras en réseau, dans lequel une information de destination de lien qui représente un site de stockage du programme est noyée dans l'information d'implantation ; et
dans lequel le dispositif de terminal affiche ladite image en provenance de ladite une caméra en réseau sur un dispositif d'affichage, il reçoit le programme qui correspond à l'information d'implantation depuis ladite une caméra en réseau sur la base de l'information de destination de lien qui est noyée dans l'information d'implantation, il entre des données audio collectées par un microphone sur ladite une caméra en réseau, lesquelles données correspondent à l'information d'implantation, et il émet lesdites données audio en sortie sur la base du programme.

16. Procédé de reproduction audio selon la revendication 15, dans lequel le programme est un applet ou un plugiciel.

17. Procédé de reproduction audio selon la revendication 15, dans lequel le programme est adapté pour émettre en sortie seulement des données audio qui correspondent à une image qui est localisée dans l'arrière-plan, parmi plusieurs images qui sont affichées sur l'écran.

18. Procédé de reproduction de son selon la revendication 15, dans lequel le programme est adapté pour supprimer des données audio qui sont transmises depuis la caméra, lesquelles données ne correspondent pas à une image qui est affichée dans l'arrière-plan.

19. Procédé de reproduction audio selon la revendication 15, dans lequel le programme est adapté pour émettre en sortie des données audio d'une image qui est affichée au centre de l'écran selon le volume de son le plus important, parmi plusieurs images de caméra qui sont affichées sur l'écran du dispositif de terminal.

20. Procédé de reproduction audio selon la revendication 15, dans lequel le programme est adapté pour émettre en sortie des données audio d'une image tout en réduisant de façon progressive un volume de son, lorsqu'elle est affichée en une position qui est déviée par rapport à la position centrale de l'écran, parmi plusieurs images de caméra qui sont affichées sur l'écran du dispositif de terminal.

21. Procédé de reproduction audio selon la revendication 15, dans lequel le dispositif de terminal comporte une section de stockage (15) pour stocker une information d'ordre d'affichage qui représente un ordre de survenue des affichages de plusieurs images qui sont transmises depuis les plusieurs caméras sur l'écran du dispositif de terminal, de façon respective.

22. Procédé de reproduction audio selon la revendication 15, dans lequel le programme est adapté pour afficher un bouton de début ou d'arrêt de reproduction audio qui permute les sorties audio des plusieurs images affichées sur l'écran..

23. Procédé de reproduction audio selon la revendication 22, dans lequel le programme est adapté pour arrêter la reproduction de données audio qui correspondent à une image, données pour lesquelles le bouton d'arrêt de reproduction audio est sélectionné.

24. Procédé de reproduction audio selon la revendication 22, dans lequel le programme est adapté pour reproduire des données audio qui correspondent à une image, données pour lesquelles le bouton de début de reproduction de son est sélectionné.

25. Procédé de reproduction audio selon la revendication 15, dans lequel le programme est adapté pour afficher un bouton (42) au moyen duquel un ordre d'affichage, lors de la survenue de l'affichage d'images transmises depuis les plusieurs caméras sur l'écran, est entré, sur l'écran.

26. Procédé de reproduction audio selon la revendication 25, dans lequel le programme est adapté pour régler un volume de son en provenance du microphone, conformément à l'ordre d'affichage des plusieurs images de caméra, lequel ordre est spécifié au moyen du bouton d'entrée, pour émettre lesdites données audio en sortie de manière à ce qu'il devienne progressivement plus important ou plus faible.

27. Procédé de reproduction audio selon la revendication 15, dans lequel, lorsque le programme sélectionne l'une quelconque de plusieurs images qui sont transmises depuis les plusieurs caméras, le programme est adapté pour afficher l'image sélectionnée dans l'arrière-plan, pour afficher d'autres images derrière l'image sélectionnée, pour régler un volume de son de données audio qui sont collectées par la caméra en fonction d'un ordre d'affichage des images et pour l'émettre en sortie de manière à ce qu'il devienne progressivement plus important ou plus faible.

28. Procédé de reproduction audio selon la revendication 15, dans lequel l'information d'implantation est constituée par des données HTML.
